# EUROPEAN PATENT APPLICATION

(11) **EP 0 886 441 A2**
(43) Date of publication of application: **23.12.1998**
(21) Application number: 98201875.6
(22) Date of filing: 05.06.1998
(51) Int. Cl.: H04N 5/335

(54) **Integrated imaging head**

(30) Priority: 16.06.1997 US 876456
(71) Applicant: EASTMAN KODAK COMPANY, Rochester, New York 14650 (US)
(72) Inventor: Beaman, Bryan A., c/o Eastman Kodak Company, Rochester, New York 14650-2201 (US); Gerstenberger, Julie K., c/o Eastman Kodak Company, Rochester, New York 14650-2201 (US); Orlicki, David M., c/o Eastman Kodak Company, Rochester, New York 14650-2201 (US)
(74) Representative: Parent, Yves

(57) **Abstract**

An imaging assembly (39) that generates all power supply voltages necessary to perform imaging operations comprising: a semiconductor imager (25) electronically connected to a printed circuit substrate, the substrate having an unregulated power input; at least one power regulator contained upon the substrate; a plurality of clock signal level translators upon the substrate; a Mixed Signal Process (44) upon the substrate having an analog to digital converter and a digital interface with an input status, an output status and a plurality of control signals; and a mechanical enclosure assembly having the substrate placed therein with an optical assembly aligned with the imager such that the enclosure hermetically seals the imager. The clock translators provide for translation of vertical sync, horizontal sync and frame sync pulses. The imaging assembly further provides support electronics (40) for the CCD. The support electronics comprise at least one voltage source for the CCD and voltages which are powered by a dedicated SMPS system (46). The image assembly further comprises a fiducial reference to which the image sensor and a lens mount for the image sensor are is precisely aligned. An IR filter (32) attached to the lens mount. A lens mount with a lens mount thereon, at least 3mm from the imager. The image assembly has a plurality of clock signal level translators further comprises at least one differential high voltage clocks.

## Description

The present application is related to U.S. Application Serial Number 08/876,634, filed June 16, 1997, by Peter Zepetella and others., and entitled, "Circuit Board Standoff", U.S. Application Serial Number 08/876,633, filed June 16, 1997 by Bryan Beaman, and others., and entitled 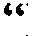 Imager Packaging Substrate. 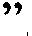 , U.S. Application Serial Number 08/876,453, filed June 16, 1997, by Dean Johnson and entitled, 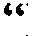 Packaging of Imaging Devices Assembly, 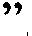 and U.S. Application Serial Number 08/876,376, filed June 16, 1997 by Dean Johnson and others., and entitled 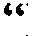 CCD Attachment Module. 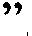

The invention relates generally to the field of imaging electronics packaging, and in particular to fiducial references for mounting used in mounting a CCD die and lens upon a substrate.

The use of Charge Coupled Device (CCD) imagers is well known within the art of image sensing. CCD imagers are sensitive to Infra Red (IR) radiation in addition to the visible spectrum. In typical applications, this sensitivity is undesirable and is mitigated by the use of an IR filter in the optical path. Typically, CCD imagers are sealed in integrated circuit (IC) packages having leads with a glass or clear plastic window within the IC package. In order to minimize package size, the window is typically located within one millimeter of the CCD die itself such that scratches and other deformities of the window are thus close to the focal plane of the system and appear as image artifacts.

The exact location of the CCD die in an imaging system is determined by the summation of tolerances resulting from the stack of elements used to make the optical head. These include: the position of the die in the package; the package to the lens mount; and the position of the lens barrel relating to the lenses. Typical CCD packages do not provide accurate fiducial references for locating the position of the die relating to an external package feature.

CCD devices typically require switching waveform inputs with low skew at a number of non-standard voltage levels. A number of relatively high voltage (>10 volt magnitude), low noise bias voltages are also required. When the CCD is driven by the appropriate biases and differential switching waveforms, it produces a low level video waveform which may be clamped, sampled, amplified and processed through an Analog to Digital Converter (ADC) to provide a digital representation of each pixel location in the CCD. This digital output is then acquired by a computer for processing and/or storage. Typical optical head assemblies used in imaging incorporate power sources for the imaging device that is shared with the remainder of the system. Supply variations as a function of load shifting in circuitry external to the head can result in undesirable artifacts in image capture.

It should be apparent from the foregoing discussion that there remains a need within the art for an optical head assembly that provides requisite elements discussed above with a clean source of power available to the image sensing device and its associated electronics.

The present invention addresses the foregoing problems within the prior art by providing an integrated imaging head assembly which incorporates a subassembly containing a CCD die mounted on a substrate bearing fiducial references to which both the die and a lens mount are aligned. The lens mount contains a glass cover which is coated with an IR filter and acts in conjunction with the die substrate and lens mount to form a hermetically sealed environment for the die. The CCD subassembly is mounted to a printed circuit which contains driver circuitry to generate the high voltage, low skew switching waveforms required by the CCD as well as the Mixed Signal Processing (MSP) electronics required to convert the analog video output of the CCD to digital form. A dedicated Switched Mode Power Supply (SMPS) is included which converts power delivered from a battery, or other power source, to the suite of voltages required by the CCD and MSP electronics. This SMPS is dedicated to, and optimized for, the operation of the imager and its attendant analog processing circuitry and is isolated from the power demand fluctuations occurring in the digital electronics of the host system.

The present invention is directed to overcoming one or more of the problems set forth above. Briefly summarized, according to one aspect of the present invention, an imaging assembly that generates all power supply voltages necessary to perform imaging operations comprising: a semiconductor imager electronically connected to a printed circuit substrate, the substrate having an unregulated power input; at least one power regulator contained upon the substrate; a plurality of clock signal level translators upon the substrate; a Mixed Signal Process upon the substrate having an analog to digital converter and a digital interface with an input status, an output status and a plurality of control signals; and a mechanical enclosure assembly having the substrate placed therein with an optical assembly aligned with the imager such that the enclosure hermetically seals the imager. The clock translators provide for translation of vertical sync, horizontal sync and frame sync pulses. The imaging assembly further provides support electronics for the CCD. The support electronics comprise at least one voltage source for the CCD and voltages which are powered by a dedicated SMPS system. The image assembly further comprises a fiducial reference to which the image sensor and a lens mount for the image sensor are is precisely aligned. An IR filter attached to the lens mount. A lens mount with a lens mount thereon, at least 3mm from the imager. The image assembly has a plurality of clock signal level translators further comprises at least one differential high voltage clocks.

These and other aspects, objects, features, and advantages of the present invention will be more clearly understood and appreciated from a review of the following detailed description of the preferred embodiments and appended claims, and by reference to the accompanying drawings.

Improved image quality results from a cleaner and more reliable source of power. Reduced cost and parts count results from incorporating all power sources within an optical head comprising elements that have a simplified alignment of the lens to the image sensor.

Fig. 1 is a block diagram illustrating a typical CCD imager implementation existing within the prior art.

Fig. 2 is a block diagram of the CCD imager implementation envisioned by the present invention that illustrates the mounting of a CCD die on the substrate wherein integrated mounting and alignment for the lens barrel are provided. The partitioning of system electronics for enhanced performance is also shown.

To facilitate understanding, identical reference numerals have been used, where possible, to designate identical elements that are common to the figures.

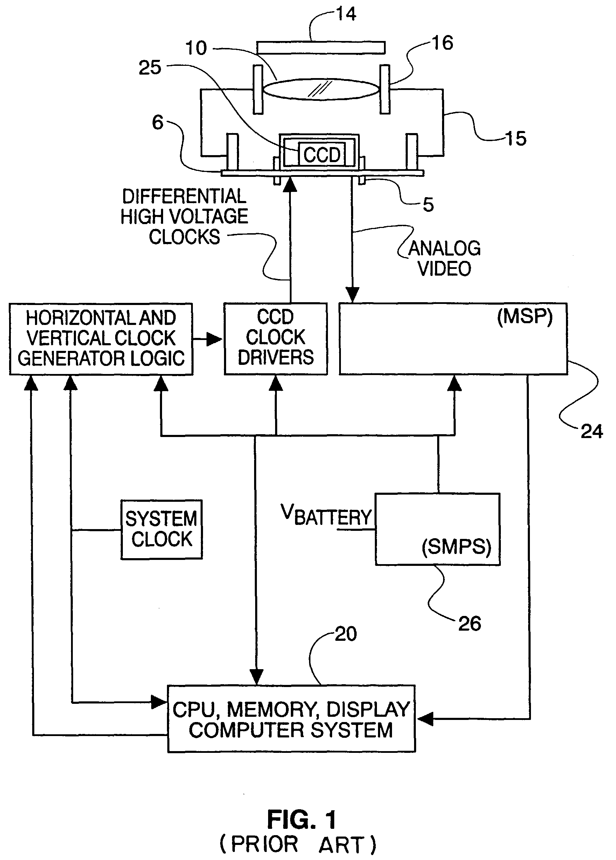

Fig. 1 is a block diagram illustrating a typical CCD imager 25 implementation existing within the prior art. The CCD imager 25 is packaged in a conventional windowed integrated circuit package 5, and mounted to a circuit board 6. A lens mount 16 having lens 10 is positioned such that the six degrees of freedom of the image place are fixed in known locations relative to the lens barrel 15. This alignment is generally performed through active alignment procedures because typical existing art CCD packages include no external mechanical fiducial references to die location

An IR filter 14 is included in the optical path to suppress the response of the CCD 25 to spectral components outside the visible region. Without an IR filter 14, the red, green and blue responses of the CCD 25 are all offset, resulting in poor color fidelity. The IR. Filter 14 may be coated on a lens element or on a separate element in the optical stack.

Logic level clock signals as required to drive imager timing are developed by dedicated hardware and translated to the relatively high voltage, low skew differential switching waveforms required by the CCD 25. The video output of the CCD 25 is processed by a Mixed Signal Processor (MSP) 24 which has an analog circuit to perform Correlated Double Sampler (CDS) and Analog to Digital Conversion (ADC) resulting in digital pixel data. The MSP 24 output is then stored and/or further processed by the host system computer system 20 which synchronizes the overall operation of the imaging system.

In typical systems a multiple output Switched Mode Power Supply (SMPS) 26 converts power from a battery, or other power source, to the suite of voltages required to drive the various analog drivers and processing stages as well as system digital logic. Post regulation of the SMPS 26 voltages used to drive the CCD 25 clocks and MSP 24 functions is typical and due largely to output regulation variability due to load changes in the digital processing subsystem.

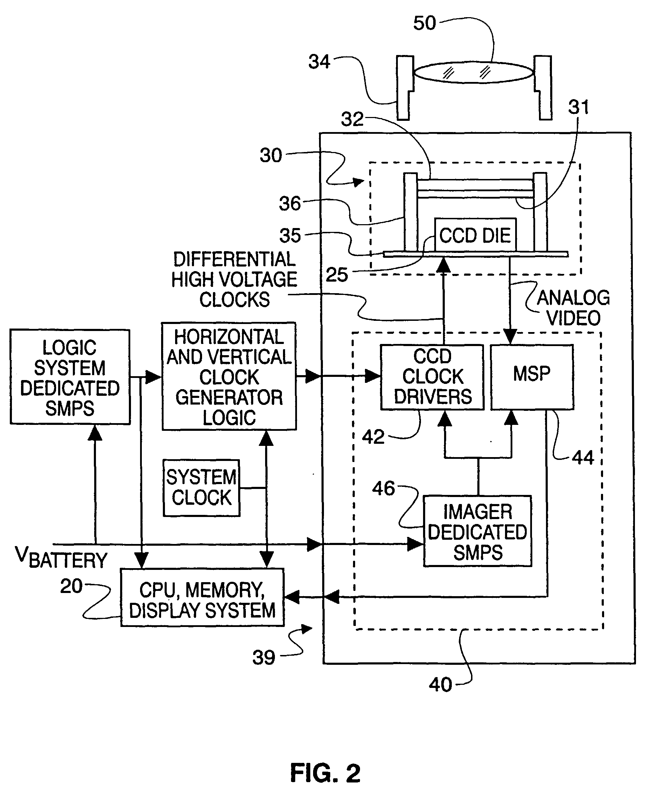

Fig. 2 is a block diagram of an imager implementation envisioned by the present invention that illustrates integrated imaging block 39 and associated electrnics. CCD 25 is mounted within integrated lens mount 30 that also has alignment mechanics contained therein, such that the die of the CCD actually rests on a printed circuit substrate 35 and wherein integrated mounting and alignment for the lens barrel 34 are provided. The partitioning of system electronics for enhanced performance is also shown. In order to eliminate the existing art optical alignment problem, the CCD 25 is aligned and mounted to the substrate 35 in a precisely orientation relative to the fiducial reference points (not shown) built into the substrate 35. The CCD 25 is then enclosed with a mechanical subassembly comprising a lens mount 36 and glass window element 31 onto which an IR filter 32 is coated. It will be understood by those skilled in the art that the IR filter may be included on any element in the system, including the glass cover element which may be plano or have optical power (ie. a lens). This assembly is precisely aligned and mounted in a known orientation relative to the same fiducial points used to orient the CCD 25 itself, guaranteeing precise alignment of the CCD 25 to the optical axis of the lens mount 35.

The image specific circuitry 40 comprises CCD clock drivers 42, and MSP electronics 44 mounted on a common printed circuit along with a minimal SMPS 46 configuration optimized to provide power exclusively to the CCD 25 and MSP 44 elements of the system. This printed circuit is mounted to the CCD 25 bearing substrate 35 to form an integrated imaging clock with the following features:

1. The CCD 25 is hermetically sealed in a package and precisely aligned to a mechanical reference point to which the lens mount 34 is also aligned. This eliminates the need for active alignment of the lens 50 to the CCD 25.

The support electronics for the CCD 25 which requires non-standard logic voltages, variations within which video quality is highly sensitive, are tightly grouped with the CCD 25 and powered with a dedicated SMPS 46 system. The design of the imager related SMPS 46 elements is simplified by segregating them from those providing logic power to the host computer system 20. The relatively low power requirements of the analog section can be satisfied with a small, high switching frequency controller (not shown), reducing size of both the magnetic and capacitive elements and improving voltage regulation and reducing ripple relative to higher power, lower frequency controllers. A resulting high quality SMPS 46 outputs allows for the elimination of linear post regulation, further reducing cost, size and power dissipation.

### PARTS LIST

- 5: IC package
- 6: circuit board
- 10: lens
- 14: IR filter
- 20: Computer system
- 24: Mixed Signal Processor
- 25: CCD
- 26: Switched Mode Power Supply
- 30: integrated lens mounts
- 31: window element
- 32: IR filter
- 34: lens barrel
- 35: Printed Circuit Substrate
- 36: lens mount
- 39: integrated imaging block
- 40: Image Specific circuitry
- 42: CCD clock drivers
- 44: MSP electronics
- 46: SMPS
- 50: lens

## Claims

1. An imaging assembly that generates all power supply voltages necessary to perform imaging operations comprising:
a semiconductor imager electronically connected to a printed circuit substrate, the substrate having an unregulated power input;
at least one power regulator contained upon the substrate;
a plurality of clock signal level translators upon the substrate;
a Mixed Signal Process upon the substrate having an analog to digital converter and a digital interface with an input status, an output status and a plurality of control signals; and
a mechanical enclosure assembly having the substrate placed therein with an optical assembly aligned with the imager such that the enclosure hermetically seals the imager.

2. The imaging assembly of claim 1 wherein the clock translators provide for translation of vertical sync, horizontal sync and frame sync pulses from logic levels to imager specific voltage levels.

3. A semiconductor device used as part of an imaging block to generate all power supply voltages necessary perform imaging operations comprising:
a clock driver;
Mixed Signal Processor (MSP) electronics having an analog to digital converter and a digital output area; and
a Switched Mode Power Supply (SMPS) configuration.

4. The device of claim 3 further comprising:
an unregulated power input to the SMPS;
at least one power regulator contained within SMPS; and
a plurality of clock signal level translators within the SMPS;

5. The device of claim 3 wherein the device further comprises a digital interface with the MSP electronics that provides an interface for input status, output status and control signals that are required for imaging operation.

6. The device of claim 3 wherein the SMPS further comprises driver circuitry means for generation of high voltage, low skew switching waveforms

7. A device of claim 3 wherein the SMPS converts power delivered to the plurality of voltages required for imaging.

8. The device of claim 3 wherein the SMPS is optimized for operating solid state imagers and attendant analog processing circuitry.

9. The device of claim 3 wherein the SMPS is isolated from the power demand fluctuations occurring off the device.

10. A method of generating an imaging block assembly that provides all power supply voltages necessary for performing imaging operations comprising:
providing a semiconductor device having an unregulated power input to the device such that the semiconductor has at least one power regulator contained within the block, a plurality of clock signal level translators.
